# NEW EUROPEAN PATENT SPECIFICATION

(11) **EP 2 747 938 B2**
(45) Date of publication and mention of the opposition decision: **02.05.2018**
(45) Mention of the grant of the patent: 07.10.2015
(21) Application number: 12784707.7
(22) Date of filing: 27.09.2012
(51) Int. Cl.: B23Q 7/02, B23Q 16/02, B23Q 39/04

(54) **MACHINE TOOL WITH ROTATABLE TABLE**
WERKZEUGMASCHINE MIT EINEM HAUPTKÖRPER MIT EINEM MOBILEN TISCH ZUR STÜTZE VON TEILEN
MACHINE-OUTIL MUNI D'UNE TABLE ROTATIVE

(30) Priority: 28.09.2011 IT BS20110132
(43) Date of publication of application: 02.07.2014
(73) Proprietor: Gnutti Transfer S.p.A., 25035 Ospitaletto (Brescia) (IT)
(72) Inventor: GABOARDI, Giordano, 25035 Ospitaletto BS (IT); CORAGLIA, Stefano, 25035 Ospitaletto BS (IT)
(74) Representative: Pulieri, Gianluca Antonio
(86) International application number: PCT/IB2012/055156
(87) International publication number: WO 2013/046148

(56) References cited:
- EP-A1- 0 726 119
- EP-A1- 0 937 539
- EP-A1- 1 757 404
- EP-B1- 0 331 862
- EP-B1- 1 516 699
- CH-B- 527 669
- DE-A1- 10 136 778
- DE-A1- 19 842 306
- DE-C1- 4 212 887
- DE-U1-202011 003 069
- GB-A- 1 234 268
- GB-A- 2 383 283

## Description

The present invention relates to a machine tool suitable to perform mechanical operations.

Specifically, the machine tool which the present invention relates to is suitable for performing various mechanical operations, such as mechanical machining to remove shavings, or again assembly or moving operations, on parts such as processed, semi-processed or finished products.

Various operations are usually performed consecutively by the machine.

In particular, said machine is comprised in a mechanical operations apparatus; in particular the apparatus has one or more machining stations in which such different consecutive operations are performed.

In addition, it is the machine tool itself which is suitable for moving the parts to be machined from one station to another.

Machines and apparatus of this type are already present and known in specific sectors of the mechanical industry; tools known on the market as machine transfer are in fact normally known of. For example, EP-0 726 119 discloses a machine tool according to the preamble of claim 1.

One of the drawbacks which afflicts the known machine tools is the fact that they lack rigidity when operating.

Specifically the main drawback of said machines is that of having to fulfil both the requirements related to the movement of the parts and the requirement to maintain, in a rigid manner, the various positions assumed so that the operations to be performed are performed with a high degree of accuracy.

The need to maintain the various positions during said operations in particular is keenly felt; the machine therefore requires a great rigidity, static but above all dynamic.

To fulfil such purposes, up to today, machines are present on the market in which a generally central area for moving and supporting the parts is present, and around it the various organs for the specific operations to be performed.

In order to maintain said required rigidity the various organs and the area for moving are separated from each other, for example mechanically, in such a way that they do not influence each other.

With the area for moving usually identified centrally, two specific types of machine tool of this kind are present on the market: machines wherein the various organs for the specific operations are positioned centrally, and machines wherein the various organs are instead positioned externally radially from the central area.

Both solutions present in any case the aforementioned problem of lack of rigidity.

In any case, up to today, in both the aforesaid solutions attempts have been made to overcome such drawback by constructing apparatus as rigid as possible; to provide such rigidity for example parts have been envisaged, in particular, bases of large dimensions and/or support systems of the parts in turn of significant size.

It is similarly clear that the space available for machinery in firms is often scant so that it is not possible to install machinery of large dimensions.

Consequently in the case in which the installation space for said apparatus is scant these are generally designed to perform the moving needed by means of kinematic chains as efficient as possible so as to be able to achieve the best compromise between having a rigid apparatus and that of performing accurate movements. However the problems mentioned above have not been resolved entirely.

The purpose of the present invention is to overcome the drawbacks typical of the prior art and satisfy the aforesaid requirement, thereby providing an apparatus with pronounced rigidity.

Said purpose is achieved by an apparatus for mechanical operations such as that described below and claimed in claim 1. Further advantageous characteristics are protected in the dependent claims. Among the aforesaid advantageous characteristics the fact emerges that the apparatus is of compact dimensions without foregoing the rigidity achieved.

The characteristics and advantages of the invention will be evident from the description given below, made by way of a non-limiting example and with reference to the appended drawings showing possible embodiments of the apparatus which the invention relates to:

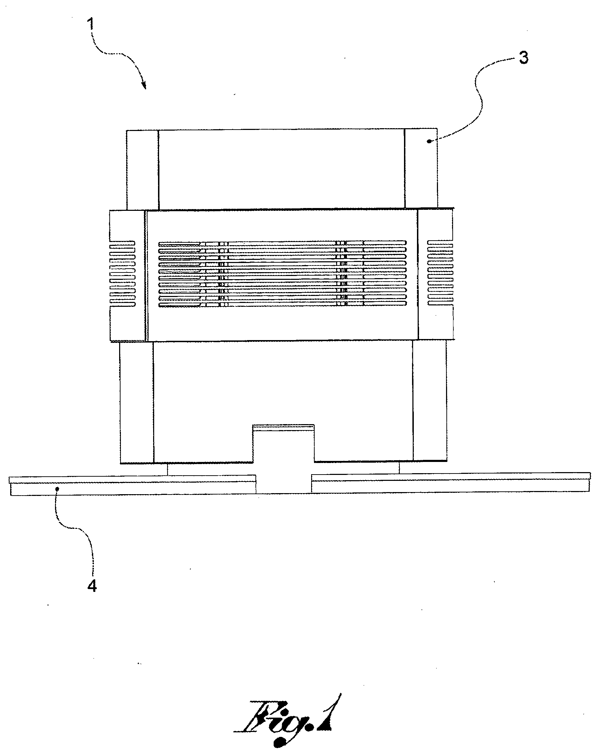

- figure 1 is a front view of an apparatus for mechanical operations according to the invention in its entirety;

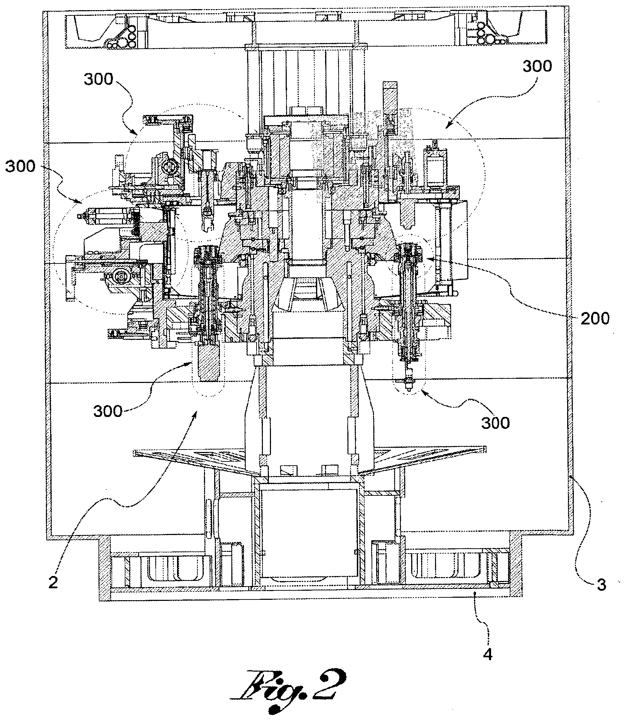

- figure 2 is a view in axial cross-section of the apparatus according to the invention;

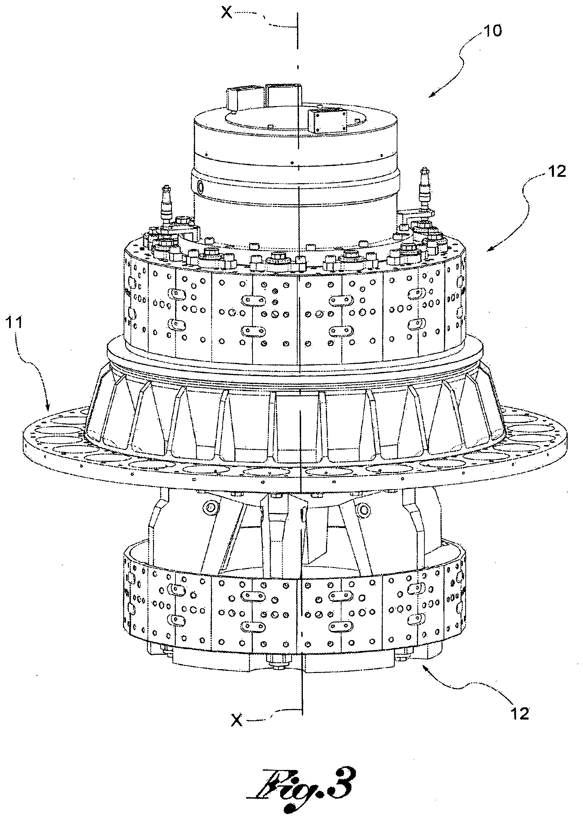

- figure 3 is a perspective view of a main body of the apparatus in figure 2;

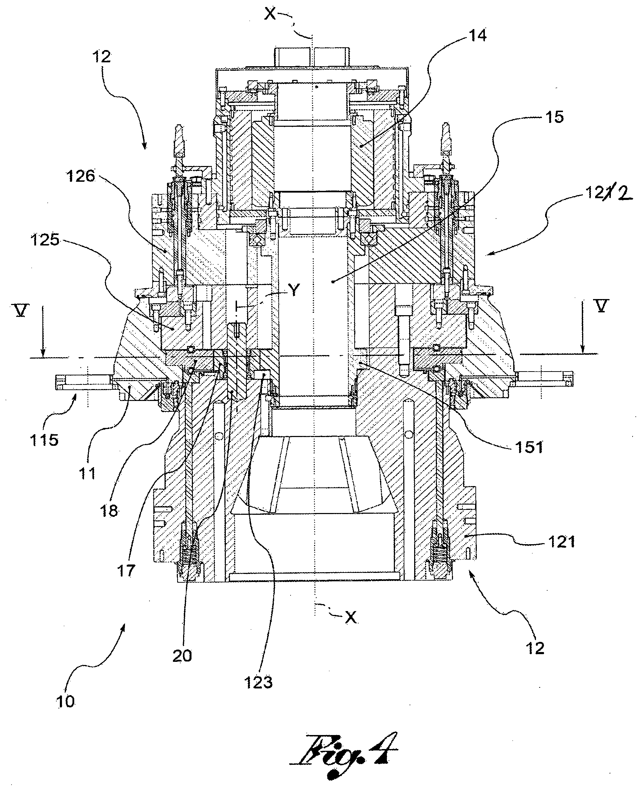

- figure 4 is a axial cross-section of the main body in figure 3;
- figure 5 is a transversal cross-section of the main body in figure 3, according to the cross-section plane V-V in figure 4.

With reference to the appended drawings, reference numeral 1 globally denotes the apparatus for mechanical operations which the invention relates to.

The apparatus for mechanical operations 1 comprises a machine tool 2, suitable for performing mechanical operations, such as mechanical machining for example to remove shavings, or moving operations, or assembly of one or more parts, preferably in a dedicated work area.

The machine tool 2 is suitable for performing one or more operations consecutively; in particular, the machine tool 2 has one or more machining stations wherein to perform the aforesaid operations; for example, the machine tool 2 has several consecutive machining stations wherein to perform several operations consecutively.

For example, the machine tool 2 is suitable for moving one or more finished or semi-processed parts, components, so as to perform one or more mechanical machining, moving or assembly operations. Each operation can be conducted concurrently with another in a specific machining station.

Preferably the apparatus comprises a protection element and/or cover 3.

Said cover 3 is suitable for covering the machine tool 2 and in particular the work area; this way easy access to the machine tool 2 from the outside is prevented, as is the possibility that the moving parts might accidentally hit an operator in the vicinity causing safety issues; at the same time said moving parts are in turn protected from impact or shifting, invalidating the operations.

In addition, the cover 3 is suitable for covering the machine for example to protect it from dust; at the same time the cover 3 is suitable for preventing shavings from coming out into the work area.

In a preferred embodiment the cover 3 is positioned laterally to the machine tool 2.

In a further embodiment, the cover 3 comprises one or more elements positioned along the top in such a way as to provide cover and shelter to the machine tool 2 also from above.

The cover 3 further comprises one or more sliding portions, so as to permit simple ergonomic access by the operator, to the various work stations in which the mechanical operations are performed by the machine tool 2. Specifically, the sliding portions are moved by special means of moving 5.

In a preferred embodiment said movement is of a translatory type, in that said elements translate, or slide, preferably in a direction, for example vertical, so as to leave one or more accesses for the operator to the work stations; this way operations such as maintenance rather than changing one or more tools do not require the operator to access the machine, for example by opening a panel or door.

In a preferred embodiment the apparatus for mechanical operations 1 also comprises a base 4, suitable for supporting the machine 2 and the cover 3.

Said base 4 is further suitable for keeping the machine tool 2 raised in relation to the ground, for example at a given height from the ground, situating itself between the support surface provided by the ground and the machine itself 2.

The machine tool 2 is suitable for performing mechanical operations; in particular, the machine tool 2 comprises means suitable for supporting and moving the parts to be machined and means suitable for performing the desired mechanical operations. In a preferred embodiment the machine tool 2 comprises a main body 10 suitable for such purposes.

In a preferred embodiment the main body 10 extends mainly preferably around a main axis X-X substantially vertical in relation to the support surface which the apparatus 1 is placed on.

Specifically, in a preferred embodiment the main body 10 extends along said main axis X-X.

For example, the main body 10 extends in a substantially axial symmetric manner around said main axis X-X.

In a preferred embodiment the main body 10 is a substantially vertical shape.

The machine tool 2 extends, as a result, substantially around the main body 10. Consequently the apparatus 1 also extends around the main body 10.

As well as the main body 10, the machine tool 2 further comprises support and gripping devices 200 and operational groups 300, suitable respectively for supporting the parts to perform operations on, and for performing such operations.

The machining stations are therefore identifiable circularly around the main body 10. In fact, preferably, the support and gripping devices 200 and the operational groups 300 are positioned radially in relation to the main body 10 and thereby in relation to the main axis X-X.

The main body 10 comprises at least one mobile table 11.

The mobile table 11 is suitable for supporting one or more parts on which to perform operations.

Preferably, the mobile table 11 is suitable for supporting at least one support and gripping device 200 of at least one part.

In particular, the mobile table 11 is suitable for moving the supported 'parts and, even the support and gripping devices 200.

In other words the mobile table 11 is suitable for moving in such a way as to shift the supported parts from one machining station to another.

Specifically, the mobile table 11 is suitable for performing rotational movements.

In a preferred embodiment the mobile table 11 is substantially the shape of a circular crown and/or ring.

Preferably, the mobile table 11 has at least one part support area 115 suitable for supporting and/or containing a part to be machined and even the support and gripping devices 200. In a preferred embodiment the mobile table has several areas for supporting parts 115 separated from each other angularly.

In a preferred embodiment the part support areas 115 are angularly equidistant from each other.

The mobile table 11 has a variable number of part support areas 115; preferably the mobile table 11 has twenty-four part support areas 115.

The main body 10 comprises, in addition, at least one fixed portion 12 suitable for supporting at least one operational group 300.

The operational group 300 is suitable for performing the operation requested in the specific work station where it is situated.

For example, the operational group 300 is suitable for performing mechanical processing for removing shavings, in this case it comprises 'turning units or mandrels, with one or more axes.

In a further embodiment, the operational group 300 is suitable for performing specific cutting operations, for example bar cutting, for which it comprises the specific means suitable for performing cutting.

In yet a further embodiment the operational group 300 is suitable for performing assembly operations in that it comprises one or more mechanical manipulation means.

The fixed portion 12 is suitable for keeping itself substantially immobile, that is maintaining its position over time and thereby keeping the supported operational group or groups 300 in position. In particular, the fixed portion 12 is immobile in relation to the main axis X-X and in relation to the mobile table 11.

Starting from the support surface and ascending along the main axis X-X, the fixed portion 12 comprises at least one lower or base part 121, and at least one upper or head part 122.

The base 121 is suitable for resting on the support surface or, if present, on the base 4.

The head 122 is, along the main axis X-X, positioned overlooking the base 121 from above.

In a preferred embodiment the base 121 and the head 122 are integrally joined to each other, in such a way that there is no movement between them of any kind.

In preferred embodiments the base 121 and the head 122 are joined to each other by means of special integral portions 125.

In one embodiment said integral portions are made as protrusions on the base 121.

In a further embodiment, said integral portions are made as protrusions on the head 122.

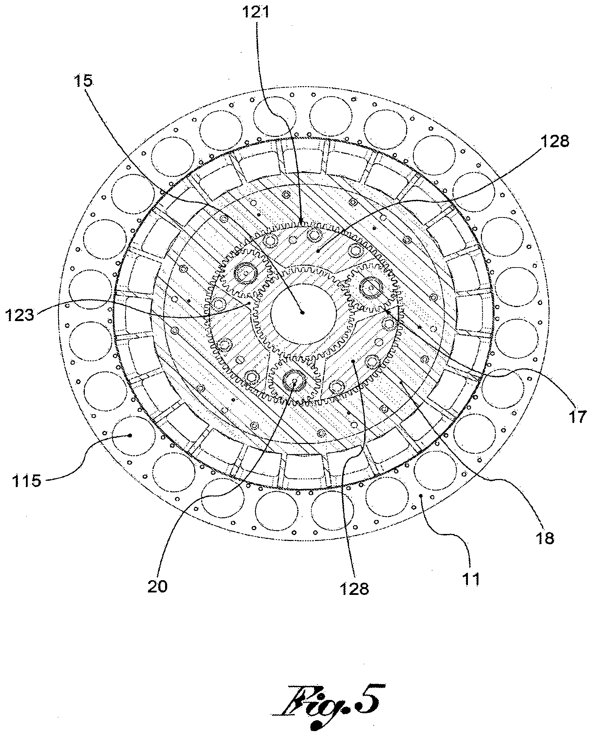

In a preferred embodiment said integral portions 125 take the form of circular sectors. In particular, with reference to figure 5, the integral portions 125 take the form of circular sectors in a hollow circle.

In a preferred embodiment said integral portions 125 are angularly distanced from each other.

In a preferred embodiment said integral portions 125 are angularly equidistance from each other.

Preferably, the integral portions 125 are three in number; in such embodiment the integral portions 125 are angularly distanced from each other by an angle of 120°.

In a preferred embodiment a hollow 123 is realised between two integral portions 125.

If the integral portion 128 is made on the base 121, said hollow 123 in turn is created on the base 121.

If the integral portion 128 is made on the head 122, said hollow 123 in turn is created on the head 122.

In a preferred embodiment the mobile table 11 is housed between the base 121 and the head 122.

Preferably, the base 121, the mobile table 11 and the head 122 are assembled extending substantially vertically starting from the support surface, that is along the main axis X-X.

Any operational groups 300 are mounted either on the base 121 or on the head 122. For example, the operational groups 300 are suitable for performing machining and/or operations on the parts either downwards or vice versa; or again the operational groups 300 are suitable for performing operations and machining radial in relation to the main axis.

Specifically, the operational groups 300 are mounted radially on the outer surface of the main body 10, that is on the outer surface of the base 121 and of the head 122. In other words the operational groups 300 can be mounted astride the rotating table 11.

In a preferred embodiment the main body 10 of the machine presents a cavity centrally, that is along the main axis X-X.

In particular, each one of the base 121, the mobile table 11 and the head 122 has inside it, preferably in the centre, a cavity, so as to create, once assembled, the aforesaid cavity.

In a preferred embodiment the main body 10 comprises means for moving the mobile table 11.

In a preferred embodiment said means for moving comprise a motor 14 and a rotation shaft 15.

According to a preferred embodiment, the motor 14 is an electric torque motor.

The shaft 15 has its main extension along the main axis X-X. In particular, the shaft 15 is housed in the cavity formed inside the main body 10.

Specifically, the shaft 15 is blocked at its ends respectively by the base 121 and by the head 122; this way translations lateral to the rotation shaft 15 are inhibited.

The rotation shaft 15 is supported in rotation, for example thanks to the presence of bearings or bushes.

The rotation shaft 15 is operatively connected to the motor 14. The shaft 15 is therefore placed in rotation by the motor 14.

The shaft 15 comprises at one end, preferably that positioned lowermost, a toothed portion 151.

In particular, said toothed portion 151 has a greater diameter than the diameter of the shaft 15.

In a preferred embodiment the rotation shaft 15 is hollow.

In order to move the mobile table 11, the means for moving further comprise a toothed crown 18 suitable for transmitting the movement.

In a preferred embodiment the toothed crown 18 is integrally connected to the mobile table 11.

In a further embodiment, the toothed crown 18 is formed in one piece with the mobile table 11.

Preferably, the toothed crown 18 is also aligned with the main axis X-X, concentric thereto.

In a preferred embodiment the toothed crown 18 is housed in a suitable annular recess comprised on the outer surface of the main body 10.

In a preferred embodiment the means for moving comprise at least one satellite 17 for transmitting the movement from the shaft 15 to the toothed crown 18.

In particular, preferably, the means for moving comprise three satellites 17 for transmitting the movement from the shaft 15 to the toothed crown 18 in a homogenous, equilibrated manner.

Said satellite 17 is, preferably, a cogged gear positioned offset with the main axis X-X.

In particular, the satellite 17 is suitable for rotating around a satellite shaft 20.

The satellite shaft 20 extends in a substantially vertical manner along a secondary axis Y-Y.

Preferably, the secondary axis Y-Y is parallel to the main axis X-X.

The distance between the second axis Y-Y and the main axis X-X is the distance between the centres of rotation of the rotation shaft 15 and of the satellite 17.

The satellite 17 thereby permits the distribution of the movement between the rotation shaft 15, placed in rotation by the motor 14, and the toothed crown 18, as a result moving the mobile table 11 to which it is attached.

In a preferred embodiment the satellites 17 and the respective satellite shafts 20 are housed in the respective hollows 123.

Axial translation of the satellite shaft 20 is inhibited by having the ends respectively inserted and blocked in the base 121 and the head 122, reciprocally blocked to each other.

In a preferred embodiment three satellites are present equidistant from each other angularly; preferably the three satellites 17 are distanced from each other by an angle of 120°.

In a preferred embodiment three satellites are present equidistant from each other radially; in fact, preferably, the space between one satellite shaft and the other of two satellites is the same.

In a preferred embodiment three satellites are present equidistant from each other both angularly and radially.

In a preferred embodiment, the head 122 is formed of at least two main elements: an upper head 125 and a lower head 126.

The upper head 125 is suitable for blocking the upper end of the rotation shaft 15.

In a preferred embodiment the upper head 125 is also suitable for providing a support to the motor 14 preferably fitted on the top of the machine tool 2.

The lower head 126 is suitable for blocking the mobile table 11, the toothed crown 18 and the satellites 17, sandwiching them for example with the base 121.

Specifically, the lower head 126 is blocked to the base 121, while the upper head 125 is blocked to the lower head 126.

In a preferred embodiment the central cavity in the main body 10 extends, along the main axis X-X, as far as the support surface of the machine tool 2 or the base 4, if present.

In particular, the final portion of the cavity, which is not occupied by the presence of the rotation shaft 15, is suitable for evacuating the discard materials produced by mechanical machining performed by the various operational groups 300. For example, the shavings produced by mechanical machining for the removal of shavings, are evacuated in this way thereby preventing the deposit inside the machine tool 2, for example on the structural parts thereof, that is the mobile table 11, the support and gripping devices 200 of the parts, or even the operational groups 300.

Innovatively, the machine tool which the present invention relates to has a pronounced rigidity. Advantageously, said rigidity values are achieved thanks to the fact that the main body is composed of fixed elements which the mobile elements are situated in, such as the mobile table and the means of moving thereof.

Advantageously, the machine tool has a pronounced dynamic rigidity. In fact, the machine tool which the present invention relates to considerably reduces the influence from heat deviations, thereby advantageously, when operating, the heat deviations being decreased the dynamic rigidity is increased.

Advantageously, the main body acts as the sole support for the parts and for the operational groups; this way the distance between the parts to be machined and the operational groups which must perform specific machining is minimised. Advantageously, as a result, the dips caused by the forces involved in turn prove minimal.

Advantageously, the mobile table is suitable for supporting and moving several parts contemporaneously; it is further advantageously suitable for supporting and moving support and gripping devices suitable for supporting and gripping more than one piece at a time.

Advantageously, the mobile table has a twenty four part support areas 115; advantageously the machine tool therefore has twenty-four machining stations.

Advantageously, the main body comprises a fixed portion which in turn comprises a base and a head; advantageously, operational groups are mountable either on the base or on the head; advantageously, as a result, operations can be performed on parts both upwards and downwards.

Advantageously, the main body has a cavity within it suitable for containing the means for moving, and in particular, the rotation shaft.

Advantageously, the motor which moves the rotation shaft is fitted on the top of the machine so as to leave the space below for the central evacuation channel of the shavings and for a base, if present.

Advantageously, the motor which moves the rotation shaft is an electric motor, this way a rotation of the table in less than 0.2 seconds from one station to another is guaranteed in the embodiment with twenty-four machining stations. In addition, the electric motor permits a prepositioning of the mobile table upstream of commencement of the various machining operations.

Advantageously, the toothed crown is integrally connected to the mobile table; advantageously, a rotation of the toothed crown corresponds to a rotational movement of the mobile table.

Advantageously, the toothed crown is placed in kinematic communication with the rotation shaft by means of the at least one satellite; the movement thus proves to be extremely accurate thanks to the interaction between the teeth of the aforesaid gears.

Advantageously, in a preferred embodiment the satellites are three in number, equidistanced angularly, so that the forces are equally divided between them.

Advantageously, the satellite is housed in a hollow made in the base or in the head; this way the satellite is sandwiched above between said base and said head, and is also laterally sandwiched between the rotation shaft and the toothed crown.

Advantageously, the satellites are able to transmit the movement from the main shaft to the rotating table with clearance close to zero during the rotation of the various means for the rotation of the table and of the table itself.

Advantageously, the satellites are able to transmit the movement from the main shaft to the rotating table with a clearance of less than ± 1 in the machining station; advantageously, this way the indexing system (tripla hirt) with which the various operational groups are moved can be recalled.

A person skilled in the art may make variations to the embodiments of the aforesaid apparatus, replacing elements with others functionally equivalent so as to satisfy specific requirements.

In a further embodiment the number of satellites is greater than three.

Or again in a further embodiment the satellites composing the kinematic chain transmitting the movement from the rotation shaft to the toothed crown are more than one.

In further embodiment variations some operational groups are not fitted on the machine but are external to it; in such work areas, for example, operational groups fitted on the main body are not present but the work stations are occupied by said external operational groups.

Such variations are also contained within the sphere of protection as defined by the following claims.

## Claims

1. Machine tool (2) suitable to perform mechanical operations comprising at least one operational group (300) suitable to perform the aforesaid operations and a main body (10) suitable to support and move pieces on which to perform said operations, wherein said main body (10) extends around a substantially vertical main axis (X-X), wherein said main body (10) comprises:
- at least one mobile table (11) suitable to support the parts;
- at least one fixed portion (12) which supports at least one said operational group (300);
- means of moving the mobile table (11) comprising a rotation shaft (15), positioned, extending along the main axis (X-X), in a central cavity of said mobile table (11);
wherein the means of moving the mobile table (11) move it rotationally and further comprise a toothed crown (18) and at least one satellite (17) positioned between the mobile table (11) and the rotation shaft (15), **characterised in that** the fixed portion (12) comprises, starting from the support plane along the main axis (X-X), at least one lower or base part (121) and at least one upper or head part (122), wherein the base (121) and the head (122) are firmly joined to each other, wherein said mobile table (11) is housed between the base (121) and the head (122),
wherein:
- the base (121) and the head (122) are integrally joined to each other by means of a plurality of integral portions (128) made as protrusions on the head (122) or on the base (121 and arrange around the main axis (X-X) with an angular distance to each other, and the satellites (17) and the respective satellite shafts (20) are housed in hollows (123) formed between respectively two of said integral portions (128),
- the head (122) forms an upper head (125) and a lower head (126), wherein the lower head (126) blocks the mobile table (11), the toothed crown (18) and the satellites (17) by sandwiching them with the base (121),
- the shaft (15) is supported in rotation but blocked at its ends respectively by the base (121) and by the head (122),
- the rotation shaft (15) is hollow.

2. Machine (2) according to claim 1, wherein the rotation shaft (15) comprises a toothed portion (151) at one end.

3. Machine (2) according to any of the previous claims, wherein means for moving the mobile table (11) comprise a motor (14) suitable to move the main shaft (15) in rotation.

4. Machine (2) according to claim 3, wherein the motor (14) is positioned on the top of the machine (2), on the head (122).

5. Machine (2) according to any of the previous claims, wherein the at least one satellite (17) is suitable to rotate around a satellite shaft (20) extending along a secondary axis (Y-Y) parallel to the main axis (X-X), radially offset from it.

6. Machine (2) according to claim 5, wherein said satellite shaft (17) is blocked at its ends by the base (121) and by the head (122).

7. Machine (2) according to claim 5, comprising three satellites (17) placed angularly equidistant from one another.

8. Machine (2) according to any of the previous claims, comprising a final portion of the central cavity suitable to evacuate the discards.

9. Machine (2) according to any of the previous claims, wherein the toothed crown (18) is firmly connected to the mobile table (11).

10. Apparatus (1) for mechanical operations comprising:
- a machine (2) according to any of the previous claims,
- a protection element and/or cover (3) suitable to cover the machine (2);
- a base (4) suitable to support the machine (2) and the cover (3).

## Patentansprüche

1. Werkzeugmaschine (2), die geeignet ist, mechanische Arbeitsgänge durchzuführen, die wenigstens eine betriebsfähige Gruppe (300), die geeignet ist, die vorstehend genannten Arbeitsgänge durchzuführen, und einen Hauptkörper (10) umfasst, der geeignet ist, um Teile, an denen die Arbeitsgänge durchgeführt werden sollen, zu halten und zu bewegen, wobei der Hauptkörper (10) sich um eine im Wesentlichen vertikale Hauptachse (X-X) erstreckt, wobei der Hauptkörper (10) umfasst:
- wenigstens einen beweglichen Tisch (11), der geeignet ist, die Teile zu halten;
- wenigstens einen festen Abschnitt (12), der wenigstens eine betriebsfähige Gruppe (300) hält;
- Mittel zum Bewegen des beweglichen Tischs (11), die eine Drehwelle (12) umfassen, die sich entlang der Hauptachse (X-X) erstreckend in einem zentralen Hohlraum des beweglichen Tischs (11) positioniert ist;
wobei die Mittel zum Bewegen des beweglichen Tischs (11) ihn drehend bewegen und ferner einen Zahnkranz (18) und wenigstens ein Planetenrad (17), das zwischen dem beweglichen Tisch (11) und der Drehwelle (15) positioniert ist, umfassen, **dadurch gekennzeichnet**, das der feste Abschnitt (12) beginnend von der Halteebene entlang der Hauptachse (X-X) wenigstens einen unteren oder Sockelteil (121) und wenigstens einen oberen oder Kopfteil (122) umfasst, wobei der Sockel (121) und der Kopf (122) fest miteinander verbunden sind, wobei der bewegliche Tisch (11) zwischen dem Sockel (121) und dem Kopf (122) untergebracht ist,
wobei:
- der Sockel (121) und der Kopf (122) mittels einer Vielzahl integraler Abschnitte (128), die als Vorsprünge auf dem Kopf (122) oder auf dem Sockel (121) hergestellt und mit einem Winkelabstand zueinander um die Hauptachse (X-X) herum angeordnet sind, integral miteinander verbunden sind, und die Planeten (17) und die jeweiligen Planetenwellen (20) in Höhlungen (123) untergebracht sind, die jeweils zwischen zwei der integralen Abschnitte (128) ausgebildet sind,
- der Kopf (122) einen oberen Kopf (125) und einen unteren Kopf (126) bildet, wobei der untere Kopf (126) den beweglichen Tisch (11), den Zahnkranz (18) und die Planeten (17) arretiert, indem er sie mit dem Sockel (121) eingeschoben hat,
- die Welle (15) in der Drehung gehalten wird, aber an ihren Enden jeweils von dem Sockel (121) und von dem Kopf (122) arretiert wird,
- die Drehwelle (15) hohl ist.

2. Maschine (2) nach Anspruch 1, wobei die Drehwelle (15) einen gezahnten Abschnitt (151) an einem Ende umfasst.

3. Maschine (2) nach einem der vorhergehenden Ansprüche, wobei die Mittel zum Bewegen des beweglichen Tischs (11) einen Motor (14) umfassen, der geeignet ist, um die Hauptwelle (15) drehend zu bewegen.

4. Maschine (2) nach Anspruch 3, wobei der Motor (14) oben auf der Maschine (2) auf dem Kopf (122) positioniert ist.

5. Maschine (2) nach einem der vorhergehenden Ansprüche, wobei das wenigstens eine Planetenrad (17) geeignet ist, um sich um eine Planetenwelle (20), die sich entlang einer sekundären Achse (Y-Y) parallel zu der Hauptachse (X-X) radial zu dieser versetzt erstreckt, zu drehen.

6. Maschine (2) nach Anspruch 5, wobei die Planetenwelle (17) an ihren Enden von dem Sockel (121) und von dem Kopf (122) arretiert wird.

7. Maschine (2) nach Anspruch 5, die drei Satellitenräder (17) umfasst, die in gleichen Winkelabständen zueinander angeordnet sind.

8. Maschine (2) nach einem der vorhergehenden Ansprüche, die einen abschließenden Abschnitt des zentralen Hohlraums umfasst, der geeignet ist, den Ausschuss abzupumpen.

9. Maschine (2) nach einem der vorhergehenden Ansprüche, wobei der Zahnkranz (18) fest mit dem beweglichen Tisch (11) verbunden ist.

10. Vorrichtung (1) für mechanische Arbeitsgänge, die umfasst:
- eine Maschine (2) nach einem der vorhergehenden Ansprüche,
- ein Schutzelement und/oder eine Abdeckung (3), die geeignet ist, die Maschine (2) abzudecken;
- einen Sockel (4), der geeignet ist, um die Maschine (2) und die Abdeckung (3) zu halten.

## Revendications

1. Machine-outil (2) apte à effectuer des opérations mécaniques et comprenant au moins un groupe opérationnel (300) apte à effectuer les opérations précitées et un corps principal (10) apte à supporter et déplacer les pièces sur lesquelles doivent être effectuées lesdites opérations, dans laquelle ledit corps principal (10) s'étend autour d'un axe principal sensiblement vertical (X-X), ledit corps principal (10) comprenant :
- au moins un plateau mobile (11) apte à supporter les pièces ;
- au moins une partie fixe (12) qui soutient ledit au moins un groupe opérationnel (300) ;
- des moyens de déplacement du plateau mobile (11) comprenant un arbre de rotation (15), positionné, s'étendant le long de l'axe principal (X-X), dans une cavité centrale dudit plateau mobile (11) ;
dans laquelle les moyens de déplacement du plateau mobile (11) déplacent celui-ci en rotation et comprennent en outre une couronne dentée (18) et au moins un satellite (17) placés entre le plateau mobile (11) et l'arbre de rotation (15), **caractérisée en ce que** la partie fixe (12) comprend, en partant du plan de support le long de l'axe principal (X-X), au moins une partie inférieure ou base (121) et au moins une partie supérieure ou tête (122), dans laquelle la base (121) et la tête (122) sont solidement liées entre elles, dans laquelle ledit plateau mobile (11) est logé entre la base (121) et la tête (122), dans laquelle :
- la base (121) et la tête (122) sont liées solidairement entre elles au moyen d'une pluralité de parties solidaires (128) réalisées en tant que projections sur la tête (122) ou sur la base (121) et disposées autour de l'axe principal (X-X) avec un écart angulaire entre elles, et les satellites (17) et les arbres (20) de satellites respectifs sont logés dans des creux (123) formés respectivement entre deux desdites parties solidaires (128),
- la tête (122) forme une tête haute (125) et une tête basse (126), dans laquelle la tête basse (126) bloque le plateau mobile (11), la couronne dentée (18) et les satellites (17) en les prenant en sandwich avec la base (121),
- l'arbre (15) est maintenu en rotation mais bloqué à ses extrémités respectivement par la base (121) et par la tête (122),
- l'arbre de rotation (15) est creux.

2. Machine (2) selon la revendication 1, dans laquelle l'arbre de rotation (15) comprend une partie dentée (151) à une extrémité.

3. Machine (2) selon l'une quelconque des revendications précédentes, dans laquelle les moyens de déplacement du plateau mobile (11) comprennent un moteur (14) apte à entrainer l'arbre principal (15) en rotation.

4. Machine (2) selon la revendication 3, dans laquelle le moteur (14) est placé en haut de la machine (2), sur la tête (122).

5. Machine (2) selon l'une quelconque des revendications précédentes, dans laquelle l'au moins un satellite (17) est apte à tourner autour d'un arbre de satellite (20) s'étendant le long d'un axe auxiliaire (Y-Y) parallèle à l'axe principal (X-X) et radialement décalé par rapport à celui-ci.

6. Machine (2) selon la revendication 5, dans laquelle ledit arbre de satellite (17) est bloqué à ses extrémités par la base (121) et par la tête (122).

7. Machine (2) selon la revendication 5, comprenant trois satellites (17) placés de manière angulairement équidistante les uns par rapport aux autres.

8. Machine (2) selon l'une quelconque des revendications précédentes, comprenant une partie finale de la cavité centrale apte à évacuer les déchets.

9. Machine (2) selon l'une quelconque des revendications précédentes, dans laquelle la couronne dentée (18) est solidement reliée au plateau mobile (11).

10. Appareil (1) destiné à des opérations mécaniques et comprenant :
- une machine (2) selon l'une quelconque des revendications précédentes,
- un élément de protection et/ou carter (3) apte à couvrir la machine (2) ;
- un socle (4) apte à supporter la machine (2) et le carter (3).
